# EUROPÄISCHE PATENTSCHRIFT

(11) **EP 4 229 306 B1**
(45) Veröffentlichungstag und Bekanntmachung des Hinweises auf die Patenterteilung: **18.06.2025**
(21) Anmeldenummer: 21794339.8
(22) Anmeldetag: 13.10.2021
(51) Int. Cl.: F15B 21/08, F15B 20/00, F15B 19/00, F15B 13/08, G05B 19/042, F15B 13/10, G05B 9/02, F15B 13/04, F15B 13/044

(54) **VORSTEUERGERÄT FÜR MINDESTENS EINEN VENTILANTRIEB EINES HYDRAULIKVENTILS UND VERFAHREN ZU DEREN BETRIEB**
PILOT CONTROL UNIT FOR AT LEAST ONE VALVE DRIVE OF A HYDRAULIC VALVE, AND METHOD FOR OPERATING SAME
UNITÉ DE COMMANDE PILOTE POUR AU MOINS UNE COMMANDE DE VANNE HYDRAULIQUE ET PROCÉDÉ D'ACTIONNEMENT ASSOCIÉ

(30) Priorität: 16.10.2020 DE 102020127383
(43) Veröffentlichungstag der Anmeldung: 23.08.2023
(73) Patentinhaber: Bucher Hydraulics GmbH, 79771 Klettgau (DE)
(72) Erfinder: SALAH, Gerd, 53773 Hennef-Blankenbach (DE); HARTMANN, Steffen, 79793 Wutöschingen (DE)
(74) Vertreter: Kreuels, Justus
(86) Internationale Anmeldenummer: PCT/EP2021/078354
(87) Internationale Veröffentlichungsnummer: WO 2022/079119

(56) Entgegenhaltungen:
- WO-A1-2004/016900
- WO-A1-2017/045701
- WO-A1-2021/180508
- DE-A1- 102005 060 414
- DE-A1- 102018 202 258
- DE-B3- 102014 017 413
- MUELLER G: "ON BOARD ELEKTRONIK (OBE) ELEKTRONISCHE STEUERGERAETE FUER MOBILHYDRAULIK", O & P - OELHYDRAULIK UND PNEUMATIK: ZEITSCHRIFT FUER FLUIDTECHNIK, AKTORIK, STEUERELEKTRONIK UND SENSORIK, VEREINIGTE FACHVERLAGE GMBH, DE, vol. 46, no. 10, 1 October 2002 (2002-10-01), pages 594/595, XP001185084, ISSN: 0341-2660

## Beschreibung

Die vorliegende Erfindung betrifft Vorrichtungen und Verfahren für den sicheren und ökonomischen Betrieb von Hydraulikventilen auch unter rauen Betriebsbedingungen. Hydraulikventile werden unter anderem bei Baumaschinen, landwirtschaftlichen Fahrzeugen und im Bergbau eingesetzt. Insbesondere bei solchen Anwendungen kommt es darauf an, dass die Hydraulikventile sehr robust gegen äußere Einflüsse, insbesondere auch Erschütterungen, sind und in allen Betriebssituationen eine sichere Einstellung gewünschter Ventilstellungen möglich ist.

Typische Hydraulikventile für die obigen Anwendungen weisen einen Ventilschieber auf, der von einem Ventilantrieb mit einem Motor (auch Aktor genannt) bewegt wird. So kann der Ventilschieber in unterschiedliche Positionen gebracht werden, wodurch Hydraulikleitungen nach Bedarf (teilweise) geöffnet oder verschlossen werden können. Solche Aktoren und Hydraulikventile sind beispielsweise in der EP3 121 485 A1 oder in der US 2008/0121830 A1 beschrieben.

Die Schrift WO 2004/016900 A1 und die Schrift DE 10 2014 017 413 B3 offenbaren jeweils Ansätze eine Parametrisierung eines Ventilantriebs eines Hydraulikventil in andere Komponenten (aus dem Ventilantrieb heraus) auszulagern und aus der DE 10 2018 202 258 A1 sind Ansätze bekannt eine Notsteuerung mit Notstromversorgung für ein Hydraulikventil für den Fall eines Stromausfalls bereitzustellen.

Solche Hydraulikventile sind regelmäßig modular aufgebaut, so dass verschiedene Aufgaben auf verschiedene Module verteilt sind. Ein sogenanntes Vorsteuergerät ist über elektrische Leitungen mit dem eigentlichen Ventilantrieb verbunden. Dabei kann ein einzelnes Vorsteuergerät dazu eingerichtet sein mehrere Ventilantriebe mit elektrischer Energie zu versorgen. Jeder Ventilantrieb kann als Aktor beispielsweise einen Schrittmotor, dessen Leistungsendstufe und eine dem Schrittmotor zugeordnete Elektronik aufweisen.

Grundsätzlich werden jedes einzelne Ventil und sein Ventilantrieb für die jeweilige Applikation individuell eingerichtet und parametrisiert. Am Beispiel einer Reihe von Ventilen zum Betrieb eines Baggerarmes, kann dies erläutert werden. Für jedes Ventil existiert eine bestimmte Vorgabe, welche Volumenströme mit welchem Druck es bei der jeweiligen Ventilstellung bereitstellen soll, damit eine an dieses Ventil angeschlossene Hydraulik ihre Aufgaben beim Betrieb des Baggerarmes erfüllen kann. Zum Betrieb eines Doppelhydraulikzylinder zum Anheben des Baggerarmes werden beispielsweise höhere Drücke und Volumenströme benötigt als für einen Einzelzylinder zum Abkippen der Baggerschaufel. Damit diese Vorgaben umgesetzt werden können, erfolgt die individuelle Einrichtung und Parametrisierung im Rahmen der sogenannten Applikation (der Einrichtung des einzelnen Ventils für die jeweilige Anwendung). Die Umsetzung bestimmter Vorgaben erfordert mechanische Veränderungen/Einrichtung am Ventil selbst, beispielsweise am Ventilschieber. Eine große Spannweite von Vorgaben kann allerdings auch durch reine Parametrisierungen im Ventilantrieb erreicht werden. Dies geschieht durch das Hinterlegen von entsprechenden Daten, insbesondere Parametern, Kennfeldern etc. in dem Ventilantrieb.

Bisher ist es üblich, dass die in einem Ventilantrieb angeordnete Elektronik auch die gesamte Parametrisierung des Ventilantriebs für den jeweiligen Anwendungsfall enthält und Regelaufgaben ausführt. So sind dort Kalibrierdaten/Kennfelder und dergleichen gespeichert und Regelkreise realisiert. Betriebsbefehle, die von einer übergeordneten Steuerung (bspw. einem Baggersteuergerät) an die Hydraulikventile übergeben werden, werden in dem jeweiligen Ventilantrieb umgesetzt. Das Vorsteuergerät liefert in dieser Konstellation nur Befehle in Form von Daten und erhält eine Rückmeldung über die korrekte Ausführung der Befehle bzw. über evtl. Störungen. Typischerweise werden kombinierte Strom- und Datenleitungen für die Stromversorgung des Ventilantriebs und die Kommunikation zwischen Vorsteuergerät und Ventilantrieb eingesetzt.

Das Vorsteuergerät wird also bisher als reine Unterstützung verwendet, um den einzelnen Ventilen eine fehlerfreie/ausfallsichere Betriebsumgebung zu schaffen. Die Parametrisierung wird zusammen mit anderen, ggf. auch mechanischen individualisierenden Eingriffen am Ventil selbst als Teil des Ventils selbst bzw. als dem Ventil zugehörig, behandelt. Dieser Ansatz wurde bisher auch immer als geeignet erachtet, weil die Parametrisierung eine alternative Vorgehensweise zur mechanischen Modifikation des jeweiligen Ventils darstellt.

Diese Aufgabenverteilung hat aber verschiedene Nachteile. Da ein bestimmter Ventilantrieb für verschiedene Ventile eingesetzt werden kann, die unterschiedliche Parametrisierungen und Regelungen verlangen, muss die Elektronik für jede unterschiedliche Einzelanwendung unterschiedlich sein, oder es muss eine Möglichkeit zur Umprogrammierung der Elektronik in jedem Ventilantrieb geben. Auch wenn sich die Anforderungen bei einem gegebenen Anwendungsfall ändern, ist ein Eingriff in die Elektronik erforderlich. Das stellt hohe Anforderungen an die Logistik und Ersatzteilhaltung. Außerdem sind die Ventilantriebe oft stärkeren mechanischen Belastungen als die an geschützteren Stellen anordenbaren Vorsteuergeräte ausgesetzt, so dass die dortige Elektronik sehr robust ausgeführt sein muss bzw. störanfälliger ist.

Aufgabe der vorliegenden Erfindung ist es, diese Nachteile zu vermeiden oder zu verringern und eine wirtschaftlich und technisch vorteilhafte Aufgabenverteilung zwischen Vorsteuergerät und Ventilantrieb zu verwirklichen.

Zur Lösung dieser Aufgaben dienen ein Vorsteuergerät gemäß dem unabhängigen Anspruch 1 und das beschriebene Verfahren gemäß Anspruch 8. Vorteilhafte Ausgestaltungen und/oder Weiterbildungen, auf die die Erfindung jedoch nicht beschränkt ist, sind in den jeweiligen abhängigen Ansprüchen angegeben. Auch umfasst die Erfindung ein Computerprogrammprodukt, umfassend Befehle, die bewirken, dass das beschriebene Vorsteuergerät zusammen mit Ventilantrieben die beschriebenen Verfahren ausführt.

Hier beschrieben werden soll ein Vorsteuergerät für mindestens einen Ventilantrieb eines Hydraulikventils mit einem Ventilschieber, wobei der Ventilschieber durch den Ventilantrieb verstellbar ist, um Hydraulikleitungen durch das Hydraulikventil mit Hydraulikflüssigkeit zu versorgen, wobei das Vorsteuergerät dazu eingerichtet ist, eine Elektronik und eine Leistungsendstufe zur Betätigung eines elektrischen Aktors des Ventilantriebs mit elektrischer Energie und Betriebsbefehlen zu versorgen, wobei das Vorsteuergerät zur Versorgung der Elektronik mit Betriebsbefehlen eine Steuerung enthält, in der dazu ein Parametrisierungsmodul vorhanden ist, in welchem Betriebsparameter für den Betrieb des mindestens einen Hydraulikventils, durch dessen Ventilantrieb hinterlegt sind.

Mit dem Parametrisierungsmodul sind einige Funktionen, die bisher die Elektronik im Ventilantrieb erfüllt hat, von dort auf ein Vorsteuergerät verlagert worden, das dadurch zu einem Vorsteuergerät mit umfangreichen Funktionen wird. Bildlich gesprochen wird die "Intelligenz" vom Ventilantrieb in das Vorsteuergerät verlagert, so dass eine "dumme" Elektronik mit reinen "Verwaltungsaufgaben", aber ohne "Regelungsfunktionen" im Ventilantrieb übrigbleibt. Technisch bedeutet das, dass das Vorsteuergerät die Parametrisierungen für die von ihm versorgten Ventilantriebe gespeichert hat und auch Regelkreise enthält und Regelaufgaben übernimmt. Die Elektronik im Ventilantrieb erhält nur noch Daten, wann der Aktor irgendwelche Bewegungen/Schritte ausführen soll und gibt diese in geeigneter Form an den Aktor und dessen Leistungsendstufe weiter. Die Ausführung oder eine eventuelle Störung werden an das Vorsteuergerät gemeldet, das dann mit diesen Informationen die Regelung des Ventilantriebs entsprechend der jeweiligen Parametrisierung übernimmt und Befehle für die nächsten Bewegungen/Schritte generiert. Ein Ventilantrieb kann auf diese Weise ohne Änderung oder Umprogrammierung für verschiedene Anwendungen eingesetzt werden oder in einer vorgegebenen Anwendung für neue Anforderungen genutzt werden. Änderungen werden im Vorsteuergerät vorgenommen oder sind dort ohnehin hinterlegt.

Da ein Vorsteuergerät nur über elektrische Leitungen mit anderen Komponenten verbunden ist, kann es gegebenenfalls an einer geschützten, gut zugänglichen Stelle, angeordnet werden auch wenn es aus Sicherheitsgründen wünschenswert ist, die Verbindungswege zu den Ventilsteuerungen so kurz wie möglich zu halten und möglichst wenige potentielle Störstellen (Umlenkungen etc.) vorzusehen. Es ist dort viel einfacher einen Austausch von Speicherdaten oder eine Umprogrammierung vorzunehmen. Außerdem muss nicht an jedem Ventilantrieb eine Schnittstelle für solche Vorgänge vorgesehen werden, sondern nur eine am Vorsteuergerät für eine Mehrzahl von Ventilantrieben. Auch kann dort ein leistungsfähiger Mikroprozessor vorgesehen werden, der die Parametrisierung von vielen verschiedenen Anwendungen enthält und die Regelung von mehreren Ventilantrieben übernehmen kann. Dies ist kostengünstiger als einen Mikroprozessor zur Regelung in jedem Ventilantrieb vorzusehen. Falls eine drahtlose Kommunikation zur Aktualisierung oder Umprogrammierung gewünscht wird, kann diese auch leichter in nur einem Vorsteuergerät als in zahlreichen Ventilantrieben realisiert werden.

Besonders bevorzugt sind in der Steuerung mindestens ein Regelkreis zur Regelung des Ventilantriebs und eine bidirektionale Datenübermittlung zum Ventilantrieb vorhanden.

Der Regelkreis ist auf einem Mikrokontroller realisiert. Aus Sicht des Regelkreises ist das Hydraulikventil die zu regelnde Regelstrecke. Der Regelkreis erhält über eine bidirektionale Datenleitung zwischen dem Hydraulikventil bzw. dessen Ventilantrieb bzw. der Elektronik Daten über den Betrieb des Hydraulikventils. Dies können beispielsweise dort auftretende elektrische Ströme, Kräfte oder auch Informationen über Stellungen des Ventilschiebers sein. Diese Daten können als Regelgrößen betrachtet werden. Sie werden von dem Regelkreis zusammen mit von dem Vorsteuergerät empfangenen Steuerdaten zur Berechnung von Betriebsbefehlen für das Hydraulikventil bzw. den Ventilantrieb etc. verwendet.

Die bidirektionale Datenübermittlung ist bspw. die Verwaltung eines Bus-Systems zwischen dem Vorsteuergerät und den Ventilantrieben, welches eine bidirektionale Datenleitung über eine Aktorstromleitung bereitstellt, mit der die Ventilantriebe und das Vorsteuergerät miteinander kommunizieren können.

Das Vorsteuergerät weist einen elektrischen Energiespeicher auf und der elektrische Energiespeicher ist dazu eingerichtet, den Ventilschieber durch den Ventilantrieb und in dem elektrischen Energiespeicher gespeicherte Energie aus jeder möglichen Ventilschieberposition in eine Abschaltposition zu bringen.

Die derartige Einrichtung des elektrischen Energiespeichers ist durch die dafür im Vorsteuergerät eingerichtete Steuerung realisiert bzw. auf einem Mikroprozessor mit Datenspeicher. Die weiteren hier beschriebenen Funktionen des Vorsteuergerätes können ebenfalls auf dieser Steuerung realisiert sein.

Nach dem Stand der Technik ist es üblich, dass der Ventilschieber mittels mindestens einer Rückstellfeder in eine Ruheposition gebracht bzw. in dieser gehalten wird, wenn der Antrieb nicht aktiv ist. Dies ist z. B. in der EP 3 483 454 A1 beschrieben. Dadurch wird eine sichere Abschaltung eines solchen Hydraulikventils, insbesondere auch bei einem Ausfall einer Stromversorgung, gewährleistet. Bei einer geeigneten Einbindung des Hydraulikventils in die Ansteuerung eines gesteuerten Bewegungselements (Baggerschaufel, Gabel eines Traktors etc.), kann durch eine sichere Abschaltung des Hydraulikventils auch ein sicherer Betrieb des gesteuerten Bewegungselementes, gewährleistet werden.

Die beschriebene Rückstellfeder bringt aber auch Nachteile mit sich. Einerseits ist es ein zusätzliches Bauteil, welches die Kosten des Ventils erhöht und zusätzlichen Bauraum benötigt, was für manche Anwendungen besonders ungünstig ist. Außerdem muss der Aktor nicht nur für eine Bewegung des Ventilschiebers gegen übliche Reibung ausgelegt sein, sondern auch die Federkraft der Rückstellfeder überwinden. Dies erfordert einen entsprechend starken Motor, was insgesamt zu entsprechenden Energieverlusten beim Betrieb führen kann. Grundsätzlich muss auch der gesamte Antrieb der Ventilschieber einschließlich eventueller Getriebe so ausgelegt sein, dass die Rückstellfeder den Motor bewegen kann.

Das Vorsteuergerät weist die Steuerung und den elektrischen Energiespeicher auf, wobei die Steuerung und der elektrische Energiespeicher dazu eingerichtet sind, den Ventilschieber mittels des Ventilantriebs und in dem elektrischen Energiespeicher gespeicherter Energie aus jeder möglichen Ventilschieberposition in eine Abschaltposition zu bringen.

Ein Hydraulikventilmodul mit beschriebenem Vorsteuergerät umfasst mindestens ein und gegebenenfalls mehrere Hydraulikventile, die ggf. in einer Reihe hintereinander in einem Ventilblock angeordnet sind. Das Hydraulikventilmodul umfasst vorzugsweise weiter für jedes Hydraulikventil einen Ventilantrieb mit separat ansteuerbarem elektrischen Aktor, mit welchem das jeweilige Hydraulikventil bzw. die Hydraulikleitungen des jeweiligen Hydraulikventils gezielt (entsprechend den Anforderungen einer übergeordneten Betriebssteuerung) mit Hydraulikflüssigkeit versorgt werden können (das heißt gezielt geöffnet, geschlossen bzw. teilweise geöffnet und/oder geschlossen werden können).

Der elektrische Aktor eines Hydraulikventils umfasst insbesondere einen Schrittmotor mit welchem die Position des Ventilschiebers verstellbar ist, um Hydraulikleitungen durch das Hydraulikventil mit Hydraulikflüssigkeit zu versorgen.

Der elektrische Aktor kann aber auch andere Arten von elektrischen Antriebsmotoren umfassen. Grundsätzlich sind vor allem bürstenlose Motoren (BLC-Motoren, BLC = brushless contact) für den elektrischen Aktor geeignet zu denen auch die Schrittmotoren zählen. Es sind aber auch andere Arten von elektrischen Antriebsmotoren in dem elektrischen Aktor einsetzbar. Grundsätzlich ist es allerdings auch vorteilhaft, wenn in dem elektrischen Aktor ein elektrischer Antriebsmotor verwendet wird, mit welchem bestimmte Positionen eines beweglichen Elementes des Motors durch die Bestromung des Motors einstellbar sind. Besonders bevorzugt werden Motoren verwendet, bei denen diese Einstellbarkeit der Position auch ohne zusätzliche Positionssensorik und Positionsregelung möglich ist. Dies gilt insbesondere für die genannten Schrittmotoren. Istwerte bzw. Messwerte können dann aber ggf. über die im Motor/Aktor auftretenden Ströme bzw. Spannungen bestimmt werden.

Bevorzugt ist der elektrische Antriebsmotor des Aktors ein Rotationsmotor mit einem Stator und einem Rotor, wobei der Rotor über ein Getriebe den Ventilschieber betätigt. Das Getriebe umfasst in bevorzugten Ausführungsformen eine Zahnstange zur Umsetzung einer Rotation des Antriebsmotors in eine lineare Bewegung des Ventilschiebers.

In anderen Ausführungsvarianten kann der elektrische Antriebsmotor auch ein Linearmotor sein, der direkt eine lineare Bewegung erzeugt, die besonders bevorzugt durch eine starre Verbindung auf den Ventilschieber übertragen wird.

Die Steuerung ist als Notsteuerung und der elektrische Energiespeicher als Notstromversorgung ausgeführt und dazu eingerichtet, für mindestens eine Notabschaltung elektrische Energie bereitzustellen, wenn in einer externen Stromversorgung des Hydraulikventilmoduls ein Fehler festgestellt wird, wobei die Notabschaltung dazu eingerichtet ist, den Ventilschieber aus jeder möglichen Ventilschieberposition in die Abschaltposition zu bringen.

Der elektrische Energiespeicher weist mindestens eine elektrische Energiespeicherzelle auf in welcher die eigentliche Speicherung der elektrischen Energie stattfindet. Zusätzlich kann der elektrische Energiespeicher weitere Komponenten umfassen. Dies sind bevorzugt Komponenten, die die Einspeisung von elektrischer Energie in den Energiespeicher und/oder die Abgabe von elektrischer Energie aus dem Energiespeicher kontrollieren. Beispielsweise kann ein Ladesteuergerät zur Steuerung der Ladung und der Entladung der elektrischen Energiespeicherzelle eine weitere Komponente des elektrischen Energiespeicher sein.

Die Abschaltposition des Ventilschiebers ist insbesondere eine Position, in welcher alle Hydraulikleitungen durch das Hydraulikventil geschlossen sind. Eine Notabschaltung erfolgt insbesondere, wenn in einer externen Stromversorgung des Hydraulikventilmoduls ein Fehler festgestellt wird. Unter einer externen Stromversorgung werden hier alle Bauteile, einschließlich elektrischer Leitungen, zur Versorgung des Hydraulikventils mit elektrischer Energie verstanden, die außerhalb des Hydraulikventilmoduls liegen. Ein Ausfall kann also durch defekte Komponenten oder Leitungen auftreten. Gerade Leitungen und deren Verbindungen außerhalb des Hydraulikventilmoduls sind im Alltagsbetrieb gefährdet. Während nach dem Stand der Technik mindestens eine Rückstellfeder dafür sorgte, dass bei einem Stromausfall das Ventil in eine sichere Abschaltposition gebracht wurde, wird erfindungsgemäß dafür der Aktor bzw. Motor eingesetzt, was jedoch eine bestimmte Mindestenergie erfordert, die nunmehr von dem elektrischen Energiespeicher ständig bereitgehalten wird. Die Steuerung nutzt diese Energie, um den gewünschten Abschaltvorgang mittels des Aktors durchzuführen. Auf Grund der immer vorhandenen Reibung, die gegebenenfalls durch geeignete Dämpfungsmittel auch erhöht werden kann, bleibt das Ventil dann in diesem sicheren Zustand, auch bei betriebs-üblichen Erschütterungen. Um Störungen zwischen dem elektrischen Energiespeicher, der Steuerung und dem Aktor möglichst auszuschließen, sind diese Bauteile räumlich sehr nahe beieinander angeordnet. Dies kommt auch durch den Begriff "Hydraulikventilmodul" zum Ausdruck, welcher eine kompakte miteinander integrierte Bauweise einer Gruppe von Hydraulikventilen, zugehörigen Aktoren und den weiteren vorgesehenen Komponenten (Steuerung, elektrischer Energiespeicher etc.) beschreibt. Eine solche Bauweise wird hier auch als Modulbauweise bezeichnet. Das Modul ist bevorzugt am Stück austauschbar in eine größere Maschine (Traktor, Bagger etc.) integriert und möglichst auch in einem gemeinsamen schützenden Gehäuse untergebracht, wie weiter oben schon erläutert wurde.

In einer bevorzugten Ausgestaltung sind mit dem Vorsteuergerät eine Mehrzahl von Hydraulikventilen verbindbar und von diesem mit Daten versorgbar.

Bevorzugt ist auch der elektrische Energiespeicher so ausgelegt, dass die Ventilschieber jedes Hydraulikventils in dem Hydraulikventilmodul aus jeder beliebigen Position in die (jeweils vorgesehene) Abschaltposition gebraucht werden können. Hiermit ist gemeint, dass auch in dem Fall, alle Ventilschieber sich in einer Position befinden, aus welcher der Energieaufwand die Ventilschieber zurück in die Abschaltposition zu bringen jeweils maximal ist, die in dem elektrischen Energiespeicher verfügbare Energie trotzdem ausreicht, um alle Ventilschieber des Hydraulikventilmoduls zurück in die Abschaltposition zu bringen.

Besonders bevorzugt ist es außerdem, wenn das Parametrisierungsmodul, der Regelkreis und die bidirektionale Datenermittlung ebenfalls jeweils so ausgebildet sind, dass sie für mehrere Hydraulikventile zum Einsatz kommen können. Bzw. es ist eine auf einem Mikroprozessor mit Datenspeicher eingerichtete Steuerung so eingerichtet, dass diese Betriebsbefehle für eine Mehrzahl von Hydraulikventile erzeugen kann und dies auch unter Einsatzbedingungen. Beispielsweise kann das Vorsteuergerät bzw. die darin angeordnete Steuerung so eingerichtet sein, dass fünf, zehn oder gegebenenfalls auch 20 Hydraulikventile damit mit Betriebsbefehlen versorgt werden können.

Das Vorsteuergerät kann insbesondere eine Schutzbeschaltung und/oder weitere (andere) gemeinsame Komponenten für mehrere Hydraulikventile aufweisen, so dass diese nicht für jeden Aktor einzeln vorhanden sein müssen. So kann ein Controller im Vorsteuergerät Funktionen für mehrere Ventile übernehmen, beispielsweise die Integrität der jeweiligen Signalübermittlung prüfen, den Einschaltstrom begrenzen, den Ausfall der externen Stromversorgung feststellen und Notabschaltungen einleiten.

Durch die Verwendung eines Vorsteuergeräts für mehrere Hydraulikventile in einem Hydraulikventilmodul wird es auch möglich signal- und stromführende Leitungen zu schleifen. Besonders bevorzugt sind einzelne Hydraulikventile in dem Hydraulikventile durch eine Reihenschaltung miteinander verbunden sind, wobei jedes Hydraulikventil bzw. jeder Aktor eines Hydraulikventils mit den benachbarten Hydraulikventilen bzw. dessen Aktor verbunden ist. Dabei haben Hydraulikventile am Anfang einer Reihenschaltung oder am Ende einer Reihenschaltung üblicherweise ein benachbartes Hydraulikventil und Hydraulikventile innerhalb der Reihe der Reihenschaltung zwei benachbarte Hydraulikventile. Das Vorsteuergerät ist dann bevorzugt nur mit einem ersten Hydraulikventil und/oder mit einem letzten Hydraulikventil der Reihenschaltung verbunden. Die Signale und der Strom für weitere Hydraulikventile der Reihenschaltung werden durch die Verbindungen der Hydraulikventile/Aktoren miteinander bis zum jeweils betroffenen Hydraulikventil/Aktor durchgeleitet bzw. durchgeschleift.

Wie weiter oben schon beschrieben ist es vorteilhaft, wenn das Vorsteuergerät eine Schnittstelle zum Datenaustausch und/oder zur Umprogrammierung aufweist. Die Steuerung enthält bevorzugt die für mindestens einen Ventilantrieb notwendigen Kalibrierdaten, Parameter und Regelkreise, und es ist eingerichtet, den Ventilantrieb als Stellglied der Regelkreise zu betreiben und Istwerte vom Ventilantrieb zu verarbeiten.

Solche Istwerte können bspw. Messwerte sein, die mit einer Elektronik in dem Ventilantrieb ermittelt werden. Die Elektronik in dem Ventilantrieb weist bevorzugt einen Speicher auf, in welchem solche Istwerte zumindest für eine gewisse Zeitspanne abgelegt werden und auf welchen ggf. auch nachträglich zugegriffen werden kann, um aus diesem Speicher die Istwerte zu ermitteln. Dies kann bspw. zur Fehlerdiagnose sehr hilfreich sein.

Besonders bevorzugt sind zwei oder mehr der Funktionen von Parametrisierungsmodul, Steuerung, Regelkreisen, und/oder bidirektionaler Datenübermittlung in einen Mikroprozessor mit Datenspeicher integriert. Bevorzugt existiert genau ein Mikroprozessor in dem Vorsteuergerät, in welchem alle wesentlichen Funktionen stattfinden. Bevorzugt ist der Mikroprozessor so ausgeführt, dass auch bei maximal auftretenden Datendursatzereignissen (bspw. wenn sämtliche angeschlossenen Hydraulikventile gleichzeitig neue Betriebsbefehle erhalten müssen) keine Überlastung auftritt.

Hier soll auch beschrieben werden, ein neuartiges Verfahren zum Betrieb eines Ventilantriebs für ein Hydraulikventil, wobei der Ventilantrieb Betriebsbefehle von einem separaten beschriebenen Vorsteuergerät über eine bidirektionale Datenübermittlung erhält und Istwerte des Hydraulikventils über die bidirektionale Datenübermittlung an das Vorsteuergerät zurück sendet und wobei das Vorsteuergerät in dem Parametrisierungsmodul gespeicherte Betriebsparameter für Ventilantrieb und Hydraulikventil enthält, die zusammen mit den Istwerten und externen Vorgaben zur Generierung der Betriebsbefehle dienen.

Die für das Vorsteuergerät beschriebenen Vorteile und Ausgestaltungsmerkmale sind auf das beschriebene Verfahren anwendbar und übertragbar.

Besonders vorteilhaft ist es, wenn das Vorsteuergerät die Regelung des Ventilantriebs mittels in der Steuerung realisierter Regelkreise und der gespeicherten Betriebsparameter übernimmt und im Ventilantrieb selbst keine Regelkreise realisiert und keine Betriebsparameter gespeichert sind.

Außerdem ist es vorteilhaft, wenn das Vorsteuergerät eine Mehrzahl von Ventilantrieben parallel oder seriell mit Betriebsbefehlen versorgt und Betriebsparameter für alle diese Ventilantriebe speichert.

Darüber hinaus soll hier ein Computerprogrammprodukt beschrieben werden, welches Befehle aufweist, die bewirken, dass ein beschriebenes Vorsteuergerät nach dem beschriebenen Verfahren arbeitet.

Das Computerprogrammprodukt kann beispielsweise auf einem Mikroprozessor mit Datenspeiche in der Steuerung des Vorsteuergeräts implementiert sein.

Das beschriebene Vorsteuergerät wird im Folgenden anhand der Figuren näher erläutert. Es ist darauf hinzuweisen, dass die Figuren nur schematisch sind und die Prinzipien der hier behandelten Erfindung erläutern sollen. Einzelne beschriebene Merkmale oder Funktionen des Ausführungsbeispiels können auch in anderer als der dargestellten Weise sinnvoll im Rahmen der Erfindung miteinander kombiniert werden. Es zeigen:
- Fig. 1a: einen schematischen Querschnitt durch ein einzelnes Hydraulikventil eines Hydraulikventilmoduls bei einer ausgelenkten Position des Ventilschiebers,
- Fig. 1b: einen schematischen Querschnitt durch ein einzelnes Hydraulikventil eines Hydraulikventilmoduls bei einer Position des Ventilschiebers in der Abschaltposition,
- Fig. 2: schematisch ein erfindungsgemäßes Hydraulikventilmodul mit seinen Anschlüssen, und
- Fig. 3: schematisch ein erfindungsgemäßes Vorsteuergerät mit seinen Komponenten und Anschlüssen.

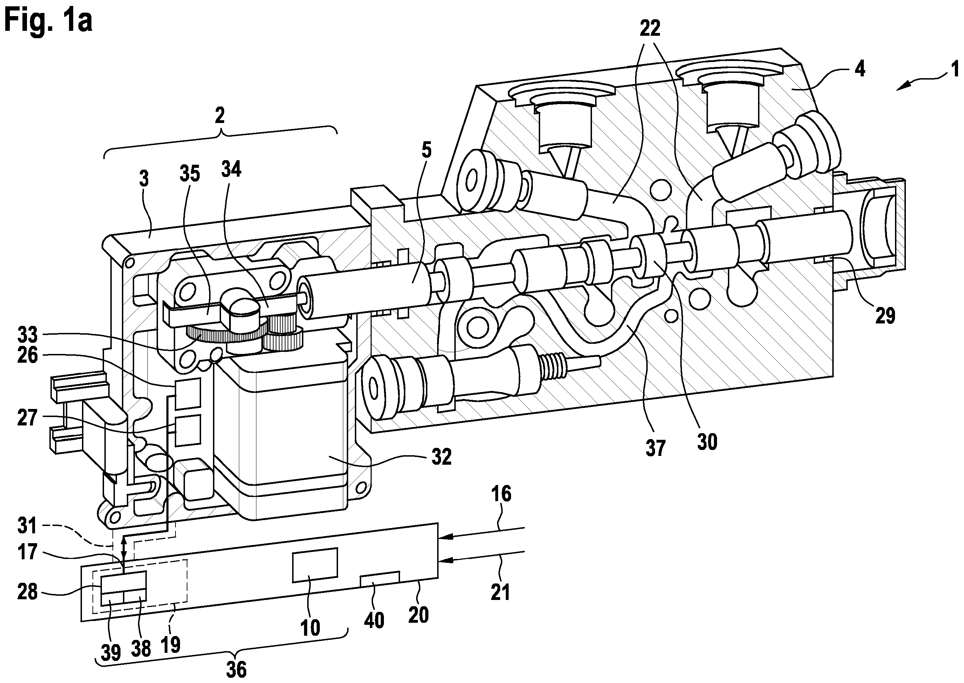

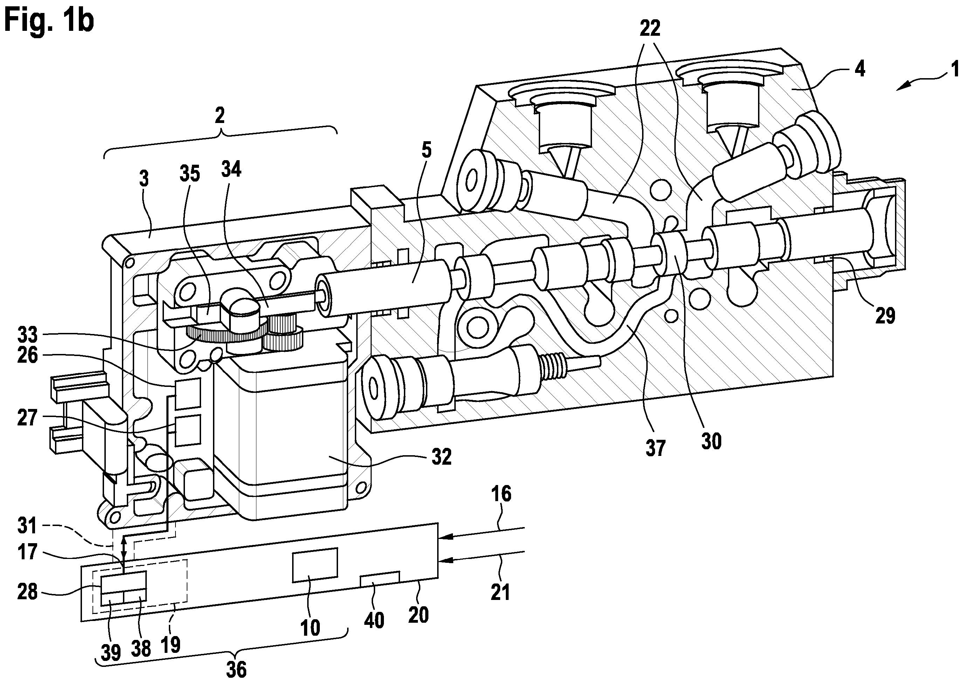

Fig. 1a und Fig. 1b zeigen schematisch den Querschnitt durch ein Hydraulikventil 1 mit einem Ventilantrieb 2 und einem Aktor 3, wobei dieses Hydraulikventil 1 Bestandteil eines hier beschriebenen Hydraulikventilmoduls 41 ist. Die Fig. 1a und 1b zeigen einen Schnitt durch ein solches Hydraulikventilmodul 41, welcher durch eines der Hydraulikventile 1 verläuft. Das Hydraulikventil 1 hat einen Hydraulikventilblock 4. Dieser Hydraulikventilblock 4 kann auch ein gemeinsamer Block sein, in welchem (hintereinander) mehrere Hydraulikventile 1 angeordnet sind. Das Hydraulikventil 1 umfasst jeweils Hydraulikleitungen 22, die beispielsweise als Bohrungen in dem Hydraulikventilblock 4 ausgeführt sein können. In dem Hydraulikventilblock 4 ist auch eine Steuerbohrung 29 vorgesehen, in welcher ein Ventilschieber 5 angeordnet ist. An dem Ventilschieber 5 existieren Steuerstrukturen 30, welche je nach Position des Ventilschiebers 5 unterschiedlich mit den Hydraulikleitungen 22 zusammenwirken und diese gezielt mit Hydraulikflüssigkeit versorgen bzw. wahlweise öffnen, verschließen und/oder teilweise öffnen oder und/oder teilweise verschließen können. Um die Funktionsweise des Hydraulikventils 1 zu illustrieren sind in den Fig. 1a und 1b verschiedene Stellungen des Ventilschiebers 5 dargestellt. Die Position des Ventilschiebers 5 kann mit dem Motor/Aktor 3 eingestellt werden. Der Motor/Aktor 3 ist in üblichen Ausführungsvarianten mit einem Elektromotor 32 und einem Getriebe 33 ausgeführt, über welches der Elektromotor 32 ein Zahnrad 35 antreibt, welches auf eine mit dem Ventilschieber 5 verbundene Zahnstange 34 wirkt. In der Schnittdarstellung gemäß den Fig. 1a und 1b ist das Zahnrad 35 hinter der Zahnstange 34 angeordnet und durch die Zahnstange 34 verdeckt. Über die Zahnstange 34 kann mit dem Motor/Aktor 3 dann die aktuelle Position des Ventilschiebers 5 eingestellt werden. Fig. 1a zeigt beispielhaft eine Position des Ventilschiebers 5, bei welcher eine der Hydraulikleitungen 22 in dem Hydraulikventilblock 4 mit einem Versorgungskanal 37 zur Bereitstellung von Hydrauliköl verbunden ist, um diese Hydraulikleitung 22 mit Hydrauliköl zu versorgen. Bevorzugt hat der Ventilschieber 5 eine vorgesehene Abschaltposition. Schematisch dargestellt sind in der Fig. 1a und 1b auch ein Vorsteuergerät 20 zur Steuerung des Ventilantriebs 2. Der Ventilantrieb 2 hat jeweils eine Elektronik 26 und eine Leistungsendstufe 27, welche zur Versorgung des Aktors 3 in dem Ventilantrieb 2 dienen. Die Elektronik 26 ist zur Ansteuerung der Leistungsendstufe 27 zur Stromversorgung des Aktors 3 eingerichtet, um den Aktor 3 mit elektrischer Energie so zu versorgen, wie es gemäß von der Elektronik 26 empfangener Betriebsbefehle erforderlich ist. Die Elektronik 26 kann darüber hinaus auch Messgrößen in dem Ventilantrieb 2 erfassen und weitergeben.

Die Ventilantriebe 2 sind über eine Aktorstromleitung 31 mit dem Vorsteuergerät 20 verbunden. Die Aktorstromleitung 31 dient gleichzeitig auch als bidirektionale Datenleitung 17. Steuerdaten von dem Vorsteuergerät 20 werden mit einem Bus-System über die als bidirektionale Datenleitung 17 betriebene Aktorstromleitung 31 an die Elektronik 26 übertragen. Istwerte bzw. Messgrößen aus dem Ventilantrieb 2 werden genauso zurück an das Vorsteuergerät 20 übertragen.

Das Vorsteuergerät 20 enthält einen elektrischen Energiespeicher 10 und eine Steuerung 19. Die Steuerung 19 führt die oben beschriebenen Steuerungsaufgaben aus und versorgt die Elektronik 26 des Ventilantriebs 2 mit Steuerbefehlen. Der elektrische Energiespeicher 10 kann ggf. eine Stromversorgung des Ventilantriebs 2 sicherstellen. In dem elektrischen Energiespeicher 10 wird elektrische Energie gespeichert, die dazu ausreicht, den Ventilschieber 5 aus jeder möglichen Ventilschieberposition in die Abschaltposition zu bringen. Die Durchführung einer solchen Abschaltung (ggf. auch Notabschaltung) wird ebenfalls von der Steuerung 19 gesteuert.

Zur Durchführung der Steuerung der Ventilantriebe 2 weist die Steuerung 19 in dem

Vorsteuergerät 20 ein Parametrisierungsmodul 28 auf, in welchem Betriebsparameter für das jeweilige Hydraulikventil 1 hinterlegt sind. Außerdem ist die Steuerung 19 dazu eingerichtet, Messwerte aus dem Ventilantrieb 2 (von der Elektronik 26) zu empfangen und basierend auf, von einer übergeordneten Steuerung 19 übermittelten Steuerdaten, einen geregelten Betrieb des Hydraulikventils zu ermöglichen. Dazu ist bevorzugt auch ein Regelkreis 38 vorgesehen. Ein Bus-System zur Kommunikation zwischen der Steuerung 19 bzw. dem Vorsteuergerät 20 und der Elektronik 26 bzw. dem Ventilantrieb 2 kann mit der hier schematisch dargestellten bidirektionalen Datenübermittlung 39 realisiert sein.

Alle diese Funktionen können auf einem Mikroprozessor mit Datenspeicher 36 implementiert sein.

Das Vorsteuergerät 20 ist bevorzugt an eine externe Stromversorgung 21 zur Stromversorgung des Vorsteuergeräts 20 und der Hydraulikventile 1 angeschlossen. Außerdem ist das Vorsteuergerät 20 mit einer Datenzuleitung 16 an eine übergeordnete Steuerung angeschlossen, bspw. an ein Baggersteuergerät, in dem Fall, dass das Hydraulikventil 1 in einem Bagger eingesetzt wird.

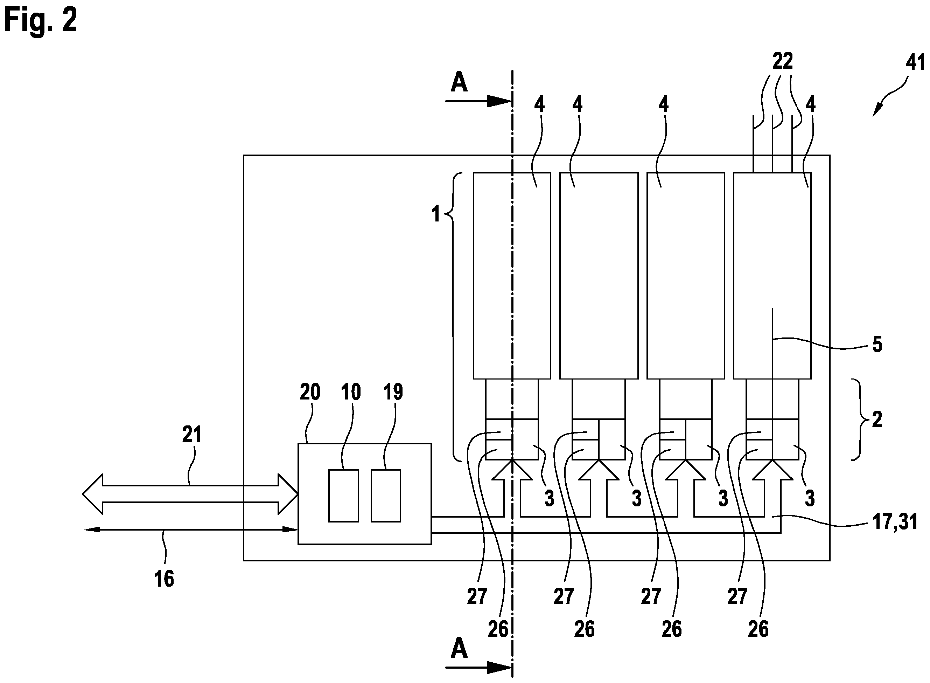

Fig. 2 zeigt ein beschriebenes Hydraulikventilmodul 41 mit in diesem Beispiel vier Hydraulikventilen 1, die hier schematisch dargestellt sind. Gezeigt ist jeweils das Hydraulikventil 1 mit dem Hydraulikventilblock 4 und dem Ventilantrieb 2 aufweisend den Aktor 3 sowie die Leistungsendstufe 27 und die Elektronik 26. Der Aktor 3 ist jeweils dazu eingerichtet, den hier nicht dargestellten Ventilschieber des jeweiligen Hydraulikventils 1 zu bewegen. Die Aktoren 3 sind über die Aktorstromleitung 31, die über ein Bus-System auch als bidirektionale Datenleitung 17 funktioniert, mit einem Vorsteuergerät 20 verbunden, welches ihnen Energie und Steuersignale liefert. Das Vorsteuergerät 20 wird über eine externe Stromversorgung 21 mit Strom versorgt und es erhält über eine Datenzuleitung 16 Betriebsbefehle zur Steuerung der Hydraulikventile 1. Die Steuerung 19 und der elektrische Energiespeicher 10 sind hier in dem Vorsteuergerät 20 angeordnet. Zur Orientierung ist in der Fig. 2 die Schnittrichtung A-A dargestellt. Die Darstellung der Fig. 1a und 1b zeigen einen derartigen Schnitt durch das Hydraulikventil 1.

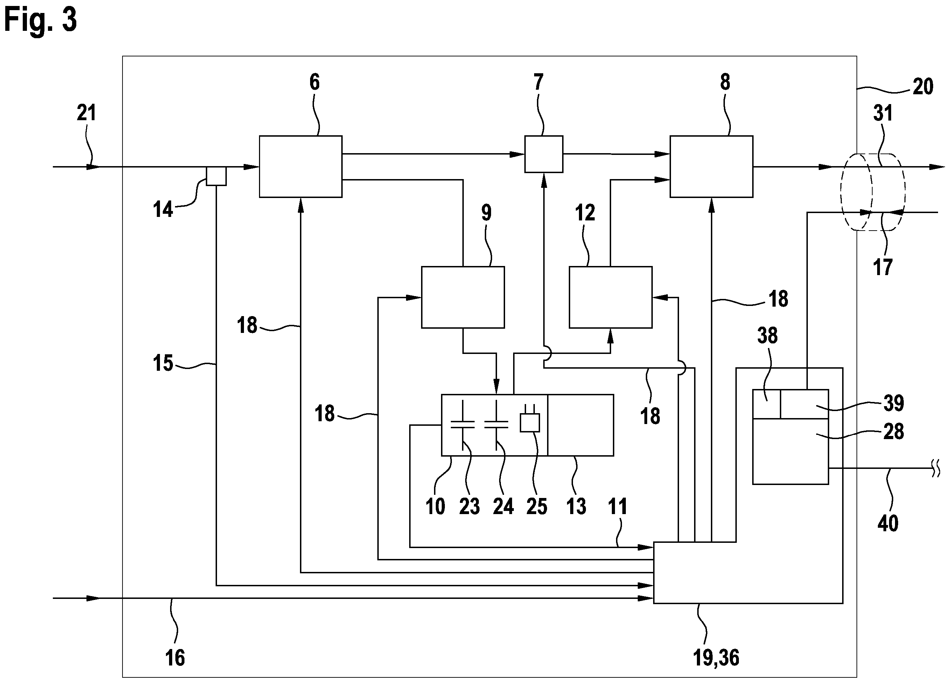

Fig. 3 zeigt schematisch und mit weiteren Details einen möglichen Aufbau eines beschriebenen Vorsteuergerätes 20 (wie es in Fig. 2 bereits dargestellt ist) mit seinen unterschiedlichen Komponenten. Das Vorsteuergerät 20 ist eingangsseitig mit einer externen Stromversorgung 21 und Datenleitungen 16 zur Versorgung und Steuerung von Aktoren 3 verbunden. Ausgangsseitig gehen eine Aktorstromleitung 31 und eine bidirektionale Datenleitung 17 von dem Vorsteuergerät 20 ab. Schematisch angedeutet ist hier, dass die Aktorstromleitung 31 und die bidirektionale Datenleitung 17 mit einer (gemeinsamen) physikalischen kombinierten Daten- und Stromleitung ausgeführt sind. Bei normalem Betrieb des Vorsteuergerätes 20 wird Strom einfach durchgeleitet. Allerdings überwacht ein Sensor 14 die Integrität der externen Stromversorgung 21 und leitet seine Messsignale über eine Sensorleitung 15 an die Steuerung 19 weiter. Bei Normalbetrieb wird außerdem der elektrische Energiespeicher 10 über eine Ladeschaltung 9 aufgeladen, so dass der Energiespeicher 10 kurz nach jedem Betriebsbeginn immer vollgeladen ist, aber nicht überladen wird. Der elektrische Energiespeicher 10 kann als elektrische Energiespeicherzelle mindestens einen Akkumulator 24 und/oder mindestens einen Kondensator 23 enthalten. Alternativ kann allerdings, wie in der Fig. 3 angedeutet, auch eine nicht wieder aufladbare Batterie 25 als Energiespeicherzelle mit einem Batteriemanagement 13 eingesetzt werden, wobei dann die Ladeschaltung 9 entfällt. Ein Spannungswandler 12 dient dazu, eine konstante Spannung bei unterschiedlichen Spannungs- oder Ladezuständen des elektrischen Energiespeichers 10 aufrecht zu erhalten. Dies kann durch einen Einschaltstrombegrenzer 8 unterstützt werden, so dass keine zu hohen Einschaltströme auftreten. Die Steuerung 19 ist über Signalleitungen 18 mit allen Komponenten verbunden, so dass diese bevorzugt alle Abläufe, die in dem Vorsteuergerät 20 auftreten, steuern kann.

Wenn der Sensor 14 der Steuerung 19 eine Störung der externen Stromversorgung 21 meldet, schaltet die Steuerung 19 mittels eines Umschalters 7 von externer Stromversorgung 21 auf eine Stromversorgung mittels des elektrischen Energiespeichers 10. Alle Aktoren 3 werden nun aus dem elektrischen Energiespeicher 10 mit Strom versorgt. Gleichzeitig unterbricht die Steuerung 19 die Datenzuleitung 16 und sendet Signale, um die Ventilschieber 5 in die Abschaltposition zu bringen bzw. für eine Notabschaltung über die bidirektionale Datenleitung 17. Eine optionale Schutzbeschaltung 6 verhindert Störungen dieses Vorganges durch die externe Stromversorgung 21. Eine Notabschaltung kann aber beispielsweise auch ausgelöst werden, wenn es Unterbrechungen in der Datenzuleitung 16 oder an anderer Stelle in einer Datenkommunikation gibt. Dann wird allerdings der elektrische Energiespeicher bzw. die Notstromversorgung nicht benötigt.

Bei einer Wiederinbetriebnahme nach einer Notabschaltung wird der elektrische Energiespeicher 10 (falls er entladen ist) schnell wieder aufgeladen, so dass ein sicherer Betrieb wieder möglich ist. Das Vorsteuergerät 20 kann noch weitere Funktionen übernehmen, beispielsweise die regelmäßige Überprüfung aller Daten- und Signalleitungen und des Energiespeichers 10. Beispielhafte Berechnungen für typische Hydraulikventile und Aktoren nach dem Stand der Technik ergeben, dass der Energiespeicher 10 für jedes Ventil und jede Notabschaltung mindestens ca. 4 Ws [Watt x Sekunde] gespeichert haben sollte. Die Kapazität des elektrischen Energiespeichers 10 kann daher nach der Zahl der angeschlossenen Ventile und der Anzahl der gewünschten durchführbaren Notabschaltungen berechnet und natürlich mit einem Aufschlag zur Sicherheit und zur Berücksichtigung einer Alterung des Energiespeichers 10 versehen werden. Ein bei der Zuschaltung des Energiespeichers 10 erfolgender Spannungsabfall kann durch den Spannungswandler 12 kompensiert werden. Im Ergebnis sollte eine erfindungsgemäße Notstromversorgung einen Energiespeicher 10 von mindestens 12 Ws haben, was für die gewünschte Betriebsspannung, insbesondere 12 V [Volt], durch Zusammenschaltung sogenannter Superkondensatoren und/oder von Akkumulator-Zellen (z. B. Lithium-Ionen-Ackus) erreicht werden kann. Die Kosten und anderen technischen Eigenschaften dieser Bauteile entscheiden über den besten Weg zur Energiespeicherung bei jedem Anwendungsfall.

Die Steuerung 19 ist (wie weiter vorne schon ausgeführt) bevorzugt auf einem Mikroprozessor realisiert. Die Steuerung 19 verarbeitet über die Datenzuleitung 16 von dem Vorsteuergerät 20 empfangene Steuerbefehle für die Hydraulikventile 1 im regulären Betrieb, um geeignete Ansteuersignale für die Aktoren der Hydraulikventile bzw. deren Leistungsendstufen zu erzeugen. Dazu weist die Steuerung 19 eine bidirektionale Datenübermittlung 39 auf, die ein Bus-System zur Kommunikation zwischen dem Vorsteuergerät 20 und der Elektronik der einzelnen Ventilantriebe verwaltet. Mit der bidirektionalen Datenübermittlung 39 wird die Aktorstromleitung 31 als bidirektionale Datenleitung 17 betrieben, mit welcher Steuerdaten an die Hydraulikventilmodule 41 übermittelt werden oder Messdaten aus den Hydraulikventilmodulen 41 empfangen werden können. Die Steuerung 19 weist weiter ein Parametrisierungsmodul 28 auf, in welchem Betriebsparameter für jedes einzelne an das Vorsteuergerät 20 angeschlossene Hydraulikventil 1 hinterlegt werden können. Das Parametrisierungsmodul 28 kann über eine Schnittstelle 40 an dem Vorsteuergerät 20 parametrisiert werden. Das heißt über diese Schnittstelle 40 können Betriebsparameter, Kennfelder etc. in dem Parametrisierungsmodul 28 bearbeitet bzw. abgelegt werden. Die Steuerung 19 weist weiter einen Regelkreis 38 auf. Der Regelkreis 38 ist dadurch gekennzeichnet, dass der unter Berücksichtigung der über die Datenzuleitung 16 empfangenen Betriebsbefehle, den im Parametrisierungsmodul 28 hinterlegten Parametern sowie unter Berücksichtigung von über die bidirektionale Datenleitung 17 von dem Ventilantrieb 2 bzw. dessen Elektronik 26 empfangenen Mess- bzw. Sensordaten geeignete Betriebsbefehle für den Aktor 3 des Hydraulikventils bzw. dessen Leistungsendstufe generiert. In dem einzelnen Hydraulikventil 1 sind keine Regelkreise 38 mehr erforderlich. Die zum geregelten Betrieb notwendigen Regelkreise 38 sind vollständig in dem Vorsteuergerät 20 realisiert bzw. werden durch das Vorsteuergerät 20 geschlossen.

Die vorliegende Erfindung erlaubt die besonders effiziente Parametrisierung von Hydraulikventilen, wodurch solche Ventile kostengünstiger appliziert werden können als mit herkömmlichen Vorsteuergeräten.

### Bezugszeichenliste

- 1: Hydraulikventil
- 2: Ventilantrieb
- 3: Aktor
- 4: Hydraulikventilblock
- 5: Ventilschieber
- 6: Schutzbeschaltung
- 7: Umschalter
- 8: Einschaltstrombegrenzer
- 9: Ladeschaltung
- 10: Stromspeicher, Energiespeicher
- 11: Statusleitung
- 12: Spannungswandler
- 13: Batteriemanagement
- 14: Sensor
- 15: Sensorleitung
- 16: Datenzuleitung
- 17: Bidirektionale Datenleitung
- 18: Signalleitungen
- 19: Steuerung
- 20: Vorsteuergerät
- 21: Externe Stromversorgung
- 22: Hydraulikleitungen
- 23: Kondensator
- 24: Akkumulator
- 25: Batterie
- 26: Elektronik
- 27: Leistungsendstufe
- 28: Parametrisierungsmodul
- 29: Steuerbohrung
- 30: Steuerstrukturen
- 31: Aktorstromleitung
- 32: Elektromotor
- 33: Getriebe
- 34: Zahnstange
- 35: Zahnrad
- 36: Mikroprozessor mit Datenspeicher
- 37: Versorgungskanal
- 38: Regelkreis
- 39: Bidirektionale Datenübermittlung
- 40: Schnittstelle
- 41: Hydraulikventilmodul

## Patentansprüche

1. Vorsteuergerät (20) für mindestens einen Ventilantrieb (2) eines Hydraulikventils (1) mit einem Ventilschieber (5), wobei der Ventilschieber (5) durch den Ventilantrieb (2) verstellbar ist, um Hydraulikleitungen (22) durch das Hydraulikventil (1) mit Hydraulikflüssigkeit zu versorgen, wobei das Vorsteuergerät (20) dazu eingerichtet ist, eine Elektronik (26) und eine Leistungsendstufe (27) zur Betätigung eines elektrischen Aktors (3) des Ventilantriebs (2) mit elektrischer Energie und Betriebsbefehlen zu versorgen, wobei das Vorsteuergerät (20) zur Versorgung der Elektronik (26) mit Betriebsbefehlen eine Steuerung (19) enthält, in der dazu ein Parametrisierungsmodul (28) vorhanden ist, in welchem Betriebsparameter für den Betrieb des mindestens einen Hydraulikventils (1) durch dessen Ventilantrieb (2) hinterlegt sind, **dadurch gekennzeichnet, dass** das Vorsteuergerät (20) einen elektrischen Energiespeicher (10) aufweist, wobei der elektrische Energiespeicher (10) dazu eingerichtet ist, den Ventilschieber (5) durch den Ventilantrieb (2) und in dem elektrischen Energiespeicher (10) gespeicherte Energie aus jeder möglichen Ventilschieberposition in eine Abschaltposition zu bringen, wobei die derartige Einrichtung des elektrischen Energiespeichers (10) durch die dafür im Vorsteuergerät eingerichtete Steuerung (19) realisiert ist, wobei die Steuerung (19) als Notsteuerung und der elektrische Energiespeicher (10) als Notstromversorgung ausgeführt und dazu eingerichtet sind, für mindestens eine Notabschaltung elektrische Energie bereitzustellen, wenn in einer externen Stromversorgung (21) des Hydraulikventils (1) ein Fehler festgestellt wird, wobei die Notabschaltung dazu eingerichtet ist, den Ventilschieber (5) aus jeder möglichen Ventilschieberposition in die Abschaltposition zu bringen.

2. Vorsteuergerät (20) nach Anspruch 1, wobei in der Steuerung (19) mindestens ein Regelkreis (38) zur Regelung des Ventilantriebs (2) und eine bidirektionale Datenübermittlung (39) zum Ventilantrieb (2) vorhanden sind.

3. Vorsteuergerät (20) nach einem der vorhergehenden Ansprüche, wobei eine Mehrzahl von Hydraulikventilen (4) mit dem Vorsteuergerät verbindbar und von diesem mit Daten versorgbar ist.

4. Vorsteuergerät (20) nach Anspruch 3, wobei das Vorsteuergerät (20) eine Schutzbeschaltung (6) und/oder andere gemeinsame Komponenten für mehrere Hydraulikventile (1) aufweist.

5. Vorsteuergerät (20) nach einem der vorhergehenden Ansprüche, wobei das Vorsteuergerät (20) eine Schnittstelle (40) zum Datenaustausch und/oder zur Umprogrammierung aufweist.

6. Vorsteuergerät (20) nach einem der vorhergehenden Ansprüche, wobei die Steuerung (19) die für mindestens einen Ventilantrieb (2) notwendigen Kalibrierdaten, Parameter und Regelkreise (38) enthält und eingerichtet ist, den Ventilantrieb (2) als Stellglied der Regelkreise (38) zu betreiben und Istwerte vom Ventilantrieb (2) zu verarbeiten.

7. Vorsteuergerät (20) nach einem der vorhergehenden Ansprüche, wobei zwei oder mehr der Funktionen vom Parametrisierungsmodul (28), Steuerung (19), Regelkreisen (38), und/oder bidirektionaler Datenübermittlung (39) in einen Mikroprozessor (36) mit Datenspeicher integriert sind.

8. Verfahren zum Betrieb eines Ventilantriebs (2) für ein Hydraulikventil (1), wobei der Ventilantrieb (2) Betriebsbefehle von einem separaten Vorsteuergerät (20) nach einem der vorhergehenden Ansprüche über eine bidirektionale Datenübermittlung (39) erhält und Istwerte des Hydraulikventils (1) über die bidirektionale Datenübermittlung (39) an das Vorsteuergerät (20) zurück sendet und wobei das Vorsteuergerät (20) in dem Parametrisierungsmodul (28) gespeicherte Betriebsparameter für Ventilantrieb (2) und Hydraulikventil (1) enthält, die zusammen mit den Istwerten und externen Vorgaben zur Generierung der Betriebsbefehle dienen.

9. Verfahren nach Anspruch 8, wobei das Vorsteuergerät (20) die Regelung des Ventilantriebs (2) mittels in der Steuerung (19) realisierter Regelkreise (38) und der gespeicherten Betriebsparameter übernimmt und im Ventilantrieb (2) selbst keine Regelkreise (38) realisiert und keine Betriebsparameter gespeichert sind.

10. Verfahren nach Anspruch 8 oder 9, wobei das Vorsteuergerät (20) eine Mehrzahl von Ventilantrieben (2) parallel oder seriell mit Betriebsbefehlen versorgt und Betriebsparameter für alle diese Ventilantriebe (2) speichert.

11. Computerprogrammprodukt aufweisend Befehle, die bewirken, dass ein Vorsteuergerät (20) nach einem der Ansprüche 1 bis 7 das Verfahren nach einem der Ansprüche 8 bis 10 ausführt.

## Claims

1. Pilot control unit (20) for at least one valve drive (2) of a hydraulic valve (1) with a valve slide (5), wherein the valve slide (5) can be adjusted by the valve drive (2), in order to supply hydraulic lines (22) with hydraulic fluid through the hydraulic valve (1), wherein the pilot control unit (20) is set up to supply electronics (26) and a power end stage (27) for actuating an electrical actuator (3) of the valve drive (2) with electrical energy and operating commands, wherein for the supply of the electronics (26) with operating commands the pilot control unit (20) comprises a control (19), in which for this purpose a parametrization module (28) is present, in which operating parameters for the operation of the at least one hydraulic valve (1) by the valve drive (2) thereof are stored, **characterized in that** the pilot control unit (20) has an electrical energy store (10), wherein the electrical energy store (10) is set up so that the valve slide (5) is moved by the valve drive (2) and energy stored in the electrical energy store (10) from any possible valve slide position into a cutout position, wherein the respective setup of the electrical energy store (10) is realized by the control (19) set up for this purpose in the pilot control unit, wherein the control (19) is configured as an emergency control and the electrical energy store (10) as an emergency power supply and they are set up to supply electrical energy for at least one emergency cutout, when a fault is detected in an external power supply (21) of the hydraulic valve (1), wherein the emergency cutout is set up to move the valve slide (5) from each possible valve slide position into the cutout position.

2. Pilot control unit (20) according to Claim 1, wherein there is at least one control loop (38) for controlling the valve drive (2) and a bidirectional data transmission (39) to the valve drive (2) in the control (19).

3. Pilot control unit (20) according to one of the preceding claims, wherein a plurality of hydraulic valves (4) is connectable to the pilot control unit and can be supplied with data by said pilot control unit.

4. Pilot control unit (20) according to Claim 3, wherein the pilot control unit (20) has a protective circuit (6) and/or further joint components for multiple hydraulic valves (1).

5. Pilot control unit (20) according to one of the preceding claims, wherein the pilot control unit (20) has an interface (40) for data exchange and/or reprogramming.

6. Pilot control unit (20) according to one of the preceding claims, wherein the control (19) contains the calibration data, parameters and control loops (38) needed for at least one valve drive (2), and it is set up to operate the valve drive (2) as an actuating element of the control loops (38) and to process actual valves of the valve drive (2).

7. Pilot control unit (20) according to one of the preceding claims, wherein two or more of the functions of the parametrization module (28), control (29), control loops (38) and/or bidirectional data transmission (39) are integrated in a microprocessor (36) with a data store.

8. Method for operating a valve drive (2) for a hydraulic valve (1), wherein the valve drive (2) receives operating commands from a separate pilot control unit (20) according to one of the preceding claims via a bidirectional data transmission (39) and sends actual values of the hydraulic valve (1) back to the pilot control unit (20) via the bidirectional data transmission (39), and wherein the pilot control unit (20) contains operating parameters stored in the parametrization module (28) for the valve drive (2) and hydraulic valve (1), which are used along with the actual values and external inputs to generate the operating commands.

9. Method according to Claim 8, wherein the pilot control unit (20) takes over control of the valve drive (2) by means of control loops (38) realized in the control (19) and the stored operating parameters and no control loops (38) are realized in the valve drive (2) itself and no operating parameters are stored.

10. Method according to Claim 8 or 9, wherein the pilot control unit (20) supplies a plurality of valve drives (2) with operating commands in parallel or in series and stores operating parameters for all these valve drives (2).

11. Computer program product having commands which cause a pilot control unit (20) according to one of Claims 1 to 7 to carry out the method according to one of Claims 8 to 10.

## Revendications

1. Unité de commande pilote (20) pour au moins un actionneur de vanne (2) d'une vanne hydraulique (1) avec un tiroir de vanne (5), le tiroir de vanne (5) étant apte à être déplacé par l'actionneur de vanne (2) afin d'alimenter en liquide hydraulique des conduites hydrauliques (22) traversant la vanne hydraulique (1), l'unité de commande pilote (20) étant conçue pour alimenter un système électronique (26) et un étage de puissance (27) en énergie électrique et en ordres de commande pour actionner un actionneur électrique (3) de l'actionneur de vanne (2), l'unité de commande pilote (20) contenant un système de commande (19) pour fournir des ordres de commande au système électronique (26), dans lequel se trouve un module de paramétrage (28) dans lequel sont enregistrés des paramètres de fonctionnement pour le fonctionnement de ladite au moins une vanne hydraulique (1) par son actionneur (2), **caractérisée en ce que** l'unité de commande pilote (20) présente un accumulateur d'énergie électrique (10), l'accumulateur d'énergie électrique (10) étant conçu pour amener le tiroir de vanne (5) dans une position d'arrêt à partir de n'importe quelle position possible du tiroir de vanne grâce à l'actionneur de vanne (2) et à l'énergie stockée dans l'accumulateur d'énergie électrique (10), un tel accumulateur d'énergie électrique (10) étant réalisé par le système de commande (19) prévu à cet effet dans l'unité de commande pilote, le système de commande (19) étant conçu sous la forme d'une commande de secours et l'accumulateur d'énergie électrique (10) sous la forme d'une alimentation électrique de secours, et étant conçus pour fournir de l'énergie électrique pour au moins un arrêt d'urgence lorsqu'un défaut est détecté dans une alimentation électrique externe (21) de la vanne hydraulique (1), l'arrêt d'urgence étant conçu pour amener le tiroir de vanne (5) à la position d'arrêt depuis n'importe quelle position possible du tiroir de vanne.

2. Unité de commande pilote (20) selon la revendication 1, dans laquelle le système de commande (19) comprend au moins un circuit de régulation (38) pour réguler l'actionneur de vanne (2) et une transmission de données bidirectionnelle (39) vers l'actionneur de vanne (2).

3. Unité de commande pilote (20) selon l'une des revendications précédentes, dans laquelle une pluralité de vannes hydrauliques (4) sont aptes à être connectées à l'unité de commande pilote et alimentées en données par celle-ci.

4. Unité de commande pilote (20) selon la revendication 3, dans laquelle l'unité de commande pilote (20) présente un circuit de protection (6) et/ou d'autres composants communs pour plusieurs vannes hydrauliques (1).

5. Unité de commande pilote (20) selon l'une des revendications précédentes, l'unité de commande pilote (20) présentant une interface (40) pour l'échange de données et/ou la reprogrammation.

6. Unité de commande pilote (20) selon l'une des revendications précédentes, dans laquelle le système de commande (19) contient des données d'étalonnage, des paramètres et des circuits de régulation (38) nécessaires pour au moins un actionneur de vanne (2) et étant conçu de façon à faire fonctionner l'actionneur de vanne (2) en tant qu'élément de réglage des circuits de régulation (38) et pour traiter les valeurs réelles de l'actionneur de vanne (2).

7. Unité de commande pilote (20) selon l'une des revendications précédentes, dans laquelle deux ou plusieurs des fonctions du module de paramétrage (28), du système de commande (19), des circuits de régulation (38) et/ou de transmission bidirectionnelle de données (39) sont intégrées dans un microprocesseur (36) avec mémoire de données.

8. Procédé de commande d'un actionneur de vanne (2) pour une vanne hydraulique (1), l'actionneur de vanne (2) recevant des ordres de fonctionnement d'une unité de commande pilote séparée (20) selon l'une des revendications précédentes par l'intermédiaire d'une transmission de données bidirectionnelle (39) et renvoyant des valeurs réelles de la vanne hydraulique (1) à l'unité de commande pilote (20) par l'intermédiaire de la transmission de données bidirectionnelle (39), et l'unité de commande pilote (20) contenant des paramètres de fonctionnement enregistrés dans le module de paramétrage (28) pour l'actionneur de vanne (2) et de la vanne hydraulique (1), qui servent à générer les commandes de fonctionnement avec les valeurs réelles et les spécifications externes.

9. Procédé selon la revendication 8, dans lequel l'unité de commande pilote (20) prend en charge la régulation de l'actionneur de vanne (2) au moyen de circuits de régulation (38) réalisés dans le système de commande (19) et des paramètres de fonctionnement mémorisés, et aucun circuit de régulation (38) n'est réalisé dans l'actionneur de vanne (2) lui-même, et aucun paramètre de fonctionnement n'est mémorisé.

10. Procédé selon la revendication 8 ou la revendication 9, dans lequel l'unité de commande pilote (20) fournit des instructions de fonctionnement à une pluralité d'actionneurs de vanne (2) en parallèle ou en série et enregistre des paramètres de fonctionnement pour tous ces actionneurs de vanne (2).

11. Programme informatique contenant des instructions qui font qu'une unité de commande pilote (20) selon l'une des revendications 1 à 7 met en œuvre le procédé selon l'une des revendications 8 à 10.
